(19) Europäisches Patentamt
European Patent Office
Office européen des brevets

(11) **EP 2 430 403 B1**

(12) **FASCICULE DE BREVET EUROPEEN**

(45) Date de publication et mention
de la délivrance du brevet:
**21.08.2013 Bulletin 2013/34**

(21) Numéro de dépôt: **10718231.3**

(22) Date de dépôt: **12.05.2010**

(51) Int Cl.:
***G01D 5/347*** *(2006.01)*

(86) Numéro de dépôt international:
**PCT/EP2010/056585**

(87) Numéro de publication internationale:
**WO 2010/130801 (18.11.2010 Gazette 2010/46)**

(54) **DISPOSITIF ET METHODE DE MESURE DE POSITION ANGULAIRE ABSOLUE**

MESSVORRICHTUNG UND -METHODE ZUR ABSOLUTWINKELMESSUNG

Absolute angular position measuring device and method

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **13.05.2009 EP 09160118**

(43) Date de publication de la demande:
**21.03.2012 Bulletin 2012/12**

(73) Titulaire: **CSEM Centre Suisse d'Electronique et
de
Microtechnique SA - Recherche et
Développement
2002 Neuchâtel (CH)**

(72) Inventeurs:
• **MASA, Peter**
**CH-2208 Les Hauts-Geneveys (CH)**
• **HEIM, Pascal**
**CH-2024 Saint-Aubin (CH)**
• **HASLER, David**
**CH-2000 Neuchâtel (CH)**
• **FRANZI, Edoardo**
**CH-1400 Yverdon-les-Bains (CH)**

(74) Mandataire: **GLN SA
Avenue Edouard-Dubois 20
2000 Neuchâtel (CH)**

(56) Documents cités:
**EP-A1- 1 890 113     US-B1- 6 528 783**

EP 2 430 403 B1

**Description**

Domaine technique

La présente invention se rapporte aux capteurs de position angulaire, permettant d'effectuer des mesures absolues.

Etat de la technique

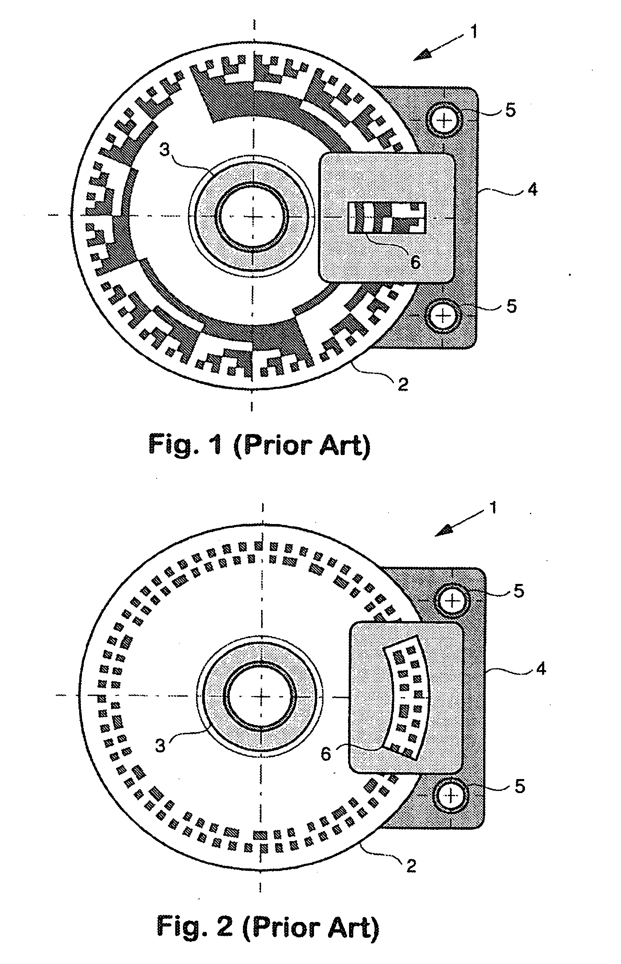

Dans le domaine des capteurs de position angulaires, on trouve essentiellement des systèmes utilisant des disques avec un marquage qui permet de connaître à tout moment la position angulaire absolue. Pour ce faire, il suffit de lire la partie du marquage qui permet d'identifier sans ambiguïté la position absolue du disque. Ce marquage peut prendre différentes formes, telles qu'un code binaire ou Gray, dont les bits sont disposés sur des anneaux concentriques (Fig. 1), ou alors un code numérique circulaire, disposé en ligne sur un seul anneau, accompagné ou pas d'un autre marquage régulier destiné à augmenter la résolution par rapport à celle du code numérique par interpolation (Fig. 2).

Le document EP1890113 propose un tel dispositif de mesure de la position angulaire d'un rotor, où le disque de marquage comporte un code composé de porions de code incrémentiel et absolu dans la direction circonférentielle et dans la direction radiale. Un capteur d'images est susceptible d'acquérir instantanément une image de la totalité des repères d'identification. La corrélation de l'image capturée avec des données de référence stockées donne la position angulaire.

Actuellement, les résolutions atteignent 12 bits à 12'000 tours/min et 16 bits à 1000 tours/min, avec des disques de l'ordre de 40 mm de diamètre.

Le type d'encodeur rotatif absolu le plus répandu est représenté à la Figure 1. Il est constitué d'un disque 2 comportant un manchon 3 qui permet de le fixer sur l'axe d'un moteur, par exemple. Un capteur 4 est fixé au stator du moteur au moyen de trous de fixation 5. La zone lue par le capteur est représentée symboliquement par la fenêtre 6. Le capteur se contente de décoder le code numérique qui se trouve au centre de la zone de lecture. Afin d'éviter les problèmes classiques dus aux changements de plusieurs bits aux transitions d'un code binaire, ce type de capteur est souvent réalisé avec un marquage utilisant un code Gray, c'est-à-dire un code dont un seul bit change à chaque transition. La résolution de ce type d'encodeur est fixée par le nombre de codes numériques et ne peut pas être augmentée par interpolation.

Un autre type d'encodeur absolu très répandu et très similaire au précédent, utilise un marquage différent. Il existe plusieurs variantes de marquage, suivant le type d'encodage numérique et la possibilité ou non d'interpoler entre les codes numériques pour augmenter la résolution de l'encodeur. L'exemple de la Figure 2 montre un marquage comportant une bande de marques régulières et périodiques, et une autre bande représentant un code numérique circulaire de même périodicité, codé selon un principe appelé Manchester. Le marquage régulier sert d'une part de référence pour la lecture du code numérique et permet d'autre part une interpolation plus fine au moyen par exemple d'une mesure de phase en quadrature. La fenêtre de lecture 6 doit être suffisamment large pour contenir au moins les N bits du code numérique.

Dans les deux situations décrites ci-dessus, la vitesse maximale de rotation du disque est donnée par la qualité de l'image obtenue par le capteur. La prise de cette image nécessite un certain temps d'exposition, durant lequel le disque ne doit pas bouger de manière trop importante. Ce déplacement du disque sous le capteur occasionne un flou de mouvement qui dégrade l'image obtenue. Afin d'assurer la lecture du code, le mouvement du disque doit être plus petit que la moitié de la distance qui sépare deux bits sur le marquage du disque (c'est-à-dire la période du marquage). La vitesse maximale de rotation s'obtient en divisant cette distance par le temps d'exposition nécessaire à la prise de l'image.

A titre d'exemple, calculons le temps d'exposition maximal pour une résolution numérique de 12 bits, soit 4096 périodes, disposées en périphérie d'un disque d'un peu plus de 40 mm de diamètre, soit environ 128 mm de circonférence pour simplifier. La période du marquage est de 1/32 de mm, soit environ 31 $\mu$m. Si on admet un déplacement d'un tiers de la période pendant le temps d'exposition (environ 10 $\mu$m), et que la vitesse de rotation est de 12'000 tours/min (25'600'000 $\mu$m/s à la périphérie du disque), alors le temps d'exposition doit être inférieur à 350 ns. Ceci est techniquement possible, mais cela montre aussi clairement le chemin qu'il faudrait encore faire pour atteindre 600'000 tours/min avec la même méthode, vitesse que se propose d'atteindre l'invention. En effet, on obtient un temps d'exposition de 7 ns, ce qui est clairement impossible d'un point de vue économique actuellement, car aucun dispositif simple ne permet d'acquérir une image aussi vite. Rappelons en outre que la vitesse du son est atteinte à environ 162'000 tours/min à la périphérie d'un disque de 40 mm de diamètre, ce qui peut poser des problèmes inattendus.

La présente invention a pour but de réaliser un capteur très compact, pouvant être utilisé en combinaison avec de très petits moteurs, de l'ordre de 6 mm de diamètre. Elle permet en outre de réaliser, avec une résolution réduite, des mesures à des vitesses de rotation extrêmement élevées, de l'ordre de 600'000 tours/min. Précisons que lorsqu'on parle de résolution réduite, il s'agit d'au moins un degré d'angle de rotation, ce qui correspond à la résolution nécessaire pour commander les phases des moteurs DC brushless (sans balais).

Divulgation de l'invention

De manière plus précise, l'invention porte sur un dispositif de mesure de la position angulaire d'un rotor comprenant

- un disque de marquage destiné à être monté concentriquement sur le rotor, ledit disque de marquage étant doté d'un marquage formé de repères d'identification régulièrement espacés les uns des autres selon une première période définissant un angle $\alpha_{period}$ séparant les centres de deux repères consécutifs, lesdits repères étant disposés concentriquement au disque pour former au moins une série comprenant un élément de référence,
- un capteur d'image doté de photodiodes réparties angulairement pour former au moins un anneau situé, en regard des repères d'identification et susceptible d'acquérir instantanément une image de la totalité desdits repères d'identification,
- des moyens de calculs programmés de manière à

    o effectuer une mesure approximative $\hat{\alpha}$ considérant la position de la série de repères du marquage comme élément caractéristique de la position du disque,

    o effectuer une mesure précise de la position $\alpha_p$ considérant la périodicité des repères comme élément caractéristique, ladite mesure précise étant obtenue par un calcul de phase en quadrature, selon

$$\begin{cases} S = \sum_{i=0}^{pD-1} I(i) \cdot \sin\left(\frac{i \cdot 360}{D}\right) \\ C = \sum_{i=0}^{pD-1} I(i) \cdot \cos\left(\frac{i \cdot 360}{D}\right) \\ \alpha_p = \text{atan2}(S, C)/p \end{cases}$$

où p est le nombre de périodes d'identification donné par $360/\alpha_{period}$, I est l'image du marquage et D est la distance en pixels entre les centres de deux repères d'identification d'une même série.

Selon l'invention, les moyens de calculs sont en outre programmés pour effectuer une mesure approximative et une mesure précise et les combiner, lorsque ledit disque de marquage effectue un déplacement inférieur à une demi-période du marquage lors de l'acquisition d'une image par le capteur d'images.

De manière avantageuse, les moyens de calcul sont en outre programmés pour n'effectuer qu'une mesure approximative lorsque ledit disque de marquage effectue un déplacement supérieur à une demi-période du marquage lors de l'acquisition d'une image par le capteur d'images.

La mesure approximative peut également être effectuée selon un calcul de phase en quadrature.

Les repères du disque de marquage peuvent être agencés en une pluralité de séries, uniformément réparties angulairement selon une deuxième période différente de la première et séparées par un secteur sans repères.

Selon un premier mode de réalisation, le marquage peut comprendre des séries de repères disposés selon un premier et un deuxième rayons, et le capteur d'image comporte deux anneaux concentriques de photodiodes respectivement agencés en regard des séries de repères disposées selon le premier et le deuxième rayons.

Selon un deuxième mode de réalisation, le marquage comprend des séries de repères disposés selon un seul premier rayon et un élément de référence, le capteur d'image comportant un seul anneau de photodiodes agencé en regard desdites séries de repères.

Dans ce deuxième mode de réalisation, on peut avoir des séries de repères identiques, l'élément de référence est un marquage de référence ajouté selon un second rayon différent du premier. Le capteur d'image comprend z photodiodes régulièrement réparties selon un anneau situé en regard du marquage de référence, le marquage de référence étant en forme d'arc de cercle, dont l'angle au centre est compris entre ]360/z et 720/z[, le nombre z étant plus grand ou égal au nombre de séries.

En variante, l'élément de référence est une différenciation de l'une des séries de repères par l'ajout ou la suppression de l'un des repères, la répartition angulaire desdites séries ayant pour conséquence le décalage de phase de 180° de la série différenciée.

La mesure de phase en quadrature peut être affectée aux extrémités des séries de repères. Cet effet peut être réduit en faisant que l'amplitude des repères aux extrémités d'une série de repères est réduite progressivement.

Les repères peuvent être des marques colorées de manière à présenter un contraste détectables par le capteur d'image ou être des trous.

De manière avantageuse, le ou les anneau(x) de photodiodes sont agencés sur un circuit électronique qui comporte des composants électroniques montés à l'intérieur du plus petit des anneaux, lesdits composants étant connectés avec l'extérieur de l'anneau par une connexion blindée.

L'invention porte également sur la méthode utilisée pour déterminer la position du disque de marquage.

Brève description des dessins

D'autres caractéristiques de la présente invention apparaîtront plus clairement à la lecture de la description qui va suivre, faite en référence au dessin annexé, dans lequel:

- les figures 1 et 2 évoquées ci-dessus représentent des dispositifs de l'état de la technique,
- les figures 3, 7 et 8 sont des illustrations d'un capteur selon l'invention,
- les figures 4a et 4b montrent des agencements de photodiodes mis en oeuvre dans l'invention,
- la figure 5 montre le circuit électronique du capteur selon l'invention,
- la figure 6 est une vue en coupe d'une photodiode utilisée avantageusement dans l'invention,
- les figures 9, 11, 13, 14, 15 et 16 montrent des marquages susceptibles d'être utilisés dans un capteur selon l'invention, et
- les figures 10 et 12 représentent les signaux obtenus, respectivement avec les marquages des figures 9 et 11, en fonction de l'angle parcouru par le marquage pendant l'acquisition de l'image, c'est-à-dire à différentes vitesses de rotation pour une vitesse d'acquisition donnée.

Mode(s) de réalisation de l'invention

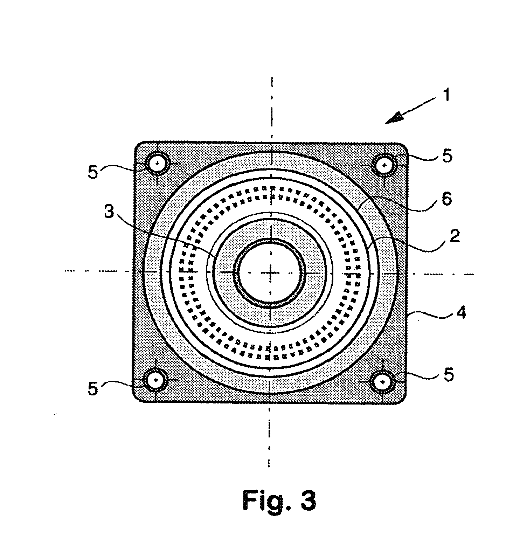

La figure 3 représente de manière générale un capteur de position absolue selon l'invention. Comme on peut le voir sur la figure, on a, comme dans les dispositifs de l'état de la technique, un disque encodeur 2 supportant un marquage circulaire et fixé par un manchon 3 sur l'axe du rotor d'un moteur. Le capteur selon l'invention propose d'utiliser tout le marquage disposé sur le disque encodeur 2.

Pour le système proposé, il faut regarder tout le marquage. Généralement, le capteur utilisé est une sorte d'imageur rectangulaire. Cependant, vu la configuration circulaire du marquage, une matrice de pixels orthogonale n'est pas très adaptée au calcul de l'information recherchée, car il serait nécessaire d'effectuer une sorte de conversion orthogonale/polaire avant de pouvoir calculer, par exemple, la phase d'un signal périodique circulaire. Par conséquent, la présente invention sera préférentiellement réalisée à l'aide d'un imageur ad-hoc, avec des pixels disposés radialement sur la circonférence d'un ou plusieurs anneaux selon le type de marquage choisi.

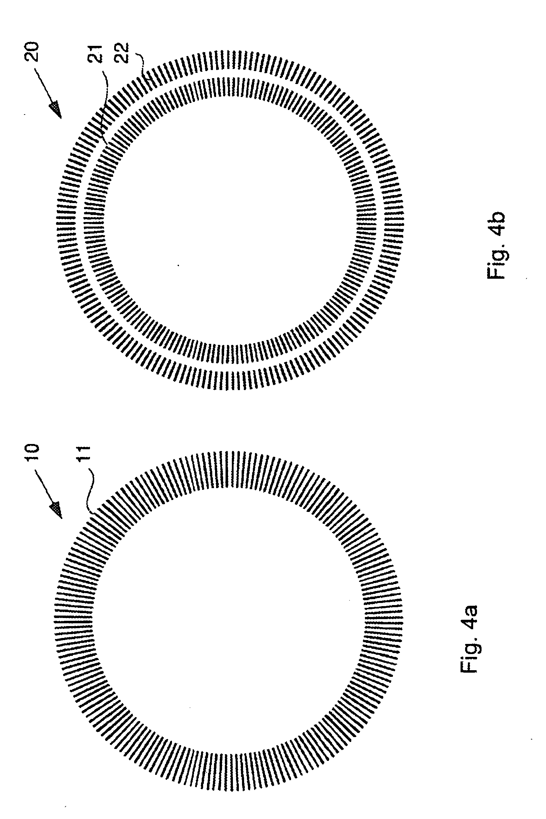

Les figures 4a et 4b montrent deux variantes de pixels disposés radialement sur des anneaux. Dans les deux cas, il y a 360 pixels par tour ce qui donne une résolution de base d'1 degré d'angle (les figures ne comportent que 180 pixels pour des raisons de lisibilité). Une version 10 ne comportant qu'un seul anneau de pixels 11 ne permet de lire qu'un seul marquage, mais a l'avantage de tolérer un plus grand décentrage du disque par rapport au capteur. Une version 20 à deux anneaux de pixels 21 et 22 nécessite plus de précision pour le centrage relatif des deux composants, mais permets plus de variations dans les marquages, comme on le verra plus loin.

Le principe n'est pas limité à deux anneaux, mais réaliser plus de trois anneaux deviendrait presque impossible au niveau du dessin du circuit. Par contre, l'utilisation d'un marquage régulier sur un seul diamètre, ne permettant pas à lui seul d'identifier la position absolue du disque sur un tour complet, pourrait être complétée par un marquage simplifié, détecté par un nombre très réduit de pixels 54 (3 ou 4 sur la périphérie) qui ne seraient utilisés que pour le repérage grossier du marquage principal, comme on le verra plus loin.

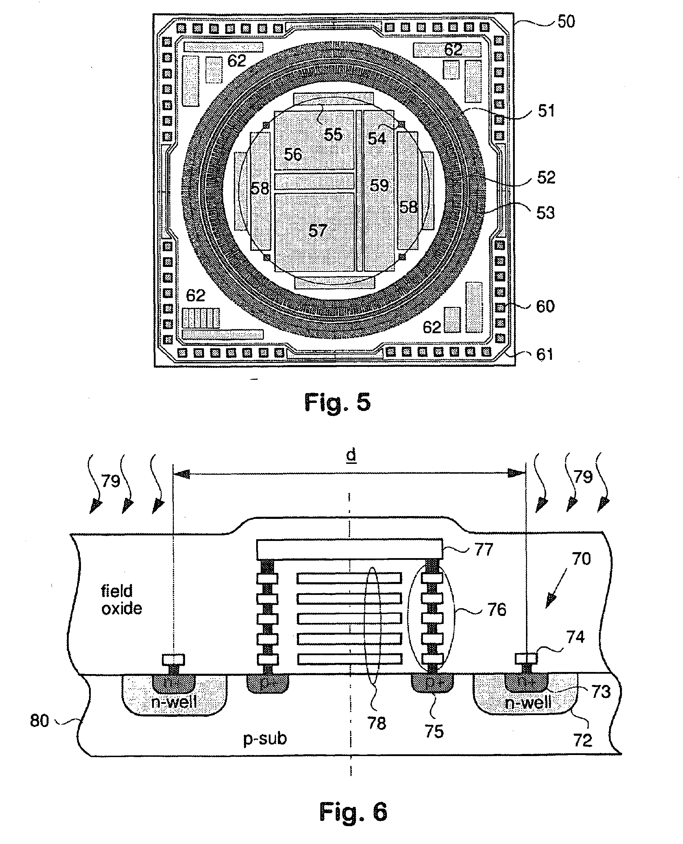

Un tel arrangement de pixel laisse une grande surface vide au centre du circuit qui peut avantageusement être exploitée. Bien que cet arrangement circulaire puisse poser des problèmes de connexions entre l'intérieur et l'extérieur de l'anneau de pixels, les six couches de métaux couramment disponibles dans les technologies CMOS actuelles permettent de les surmonter. La figure 5 montre un « layout » possible de circuit SoC (System on Chip) 50 pour réaliser le capteur complet nécessaire à la réalisation de l'invention.

Afin de réaliser un capteur aussi petit que possible, des pads 60 ne sont disposés que dans les angles. Prenons un exemple basé sur un disque de 4 mm de diamètre, la taille du chip 50 montré à la Figure 5 serait de $4.5 \times 4.5$ mm$^2$. Ces dimensions permettraient de réaliser un capteur de section carrée de 6 mm de côté ou de section circulaire d'un diamètre d'environ 7 mm, avec un disque encodeur d'un diamètre de 4 mm comportant deux anneaux de marquage ainsi qu'un marquage grossier détecté par 4 pixels 54 disposés sur le cercle intérieur.

Le circuit comporte différents blocs fonctionnels représentés par des rectangles (55 à 59, 62). La Figure 5 montre des blocs arbitraires, pour une description de principe. Le capteur d'image est constitué de deux anneaux de photodiodes radiales 51 et 52 servant à la prise d'image d'un double marquage. Ces photodiodes font partie de pixels disposés sur un anneau intermédiaire 53 comprenant les circuits d'intégration des photo-courants délivrés par lesdites photodiodes pendant la prise d'image, ainsi que les circuits nécessaires à la conversion numérique et à la lecture des résultats.

A l'intérieur des anneaux de photodiodes, se trouvent des blocs de lecture des pixels 55, des circuits de calcul dédiés 58, une mémoire RAM 56, un microcontrôleur 57 et une machine d'état spécifique 59, par exemple, les détails n'étant pas nécessaires à la description de l'invention.

Dans les coins du circuit 50, on trouvera divers blocs 62 tels que des références de tension, des références de courant, des circuits de polarisation, des circuits de communication ou autres.

Pour poursuivre la description de notre exemple, on considère un disque de 4 mm de diamètre avec un double marquage. Les photodiodes sont disposées comme à la Figure 4 sous la forme de deux anneaux 21 et 22 ininterrompus de chacun 360 photodiodes discrètes. Elles mesurent 200 µm de long et sont toutes de largeurs identiques. L'anneau de photodiodes externe a un diamètre extérieur de 3.8 mm et un diamètre intérieur de 3.4 mm. L'anneau de photodiodes interne a un diamètre extérieur de 3.2 mm et un diamètre intérieur de 2.8 mm. De ces dimensions, il ressort que la périodicité des photodiodes est d'environ 33.2 µm à l'extérieur de l'anneau externe et d'environ 24.4 µm à l'intérieur de l'anneau interne. Cette périodicité correspond à l'espacement entre photodiodes représenté par la distance d de la Figure 6.

Pour faire passer les conducteurs des différents signaux et d'alimentation du centre du circuit vers la périphérie ou inversement, il faut passer les conducteurs entre les photodiodes. Lorsque des signaux numériques passent très près de photodiodes, il est préférable de blinder ces signaux, particulièrement avec des pixels de capteurs de vision numérique (DVS de l'anglais Digital Vision Sensor).

La Figure 6 montre en 70 une photodiode fabriquée avec un caisson de type N 72 dans un substrat de type P 80, ce qui correspond à des technologies couramment utilisées. La photodiode ne doit pas être recouverte de métal, exceptée une connexion 74 qui permet de contacter la photodiode n-well/p-sub au moyen d'une zone plus fortement dopée N+ 73.

Entre chaque paire de photodiodes espacées d'une distance d, il faut faire passer un arrangement de connexions assurant le blindage des photodiodes par rapport aux signaux et alimentations que ces connexions conduisent, comme expliqué ci-dessus. Un arrangement possible est montré à la Figure 6 pour une technologie comportant 6 niveaux de métal. Dans l'exemple donné, en se basant sur une technologie CMOS 0.18 µm, la distance d entre les centres de deux photodiodes est de 24.4 µm au minimum. Si on attribue seulement 1/3 de cette distance aux canaux de routage, on obtient, à titre d'exemple, des pistes de routage 78 de 6.0 µm de large avec des pistes de blindage 76 de 0.5 µm de large et un espacement de 0.5 µm entre les pistes 76 et 78 (c'est-à-dire plus que le minimum nécessaire pour réduire les capacités de couplage avec le blindage).

Dans cet exemple, une fenêtre optique 70 des photodiodes est délimitée par les canaux de routage. Si l'on veut des largeurs de fenêtres optiques constantes, les canaux de routage vont s'élargir proportionnellement à la distance du centre.

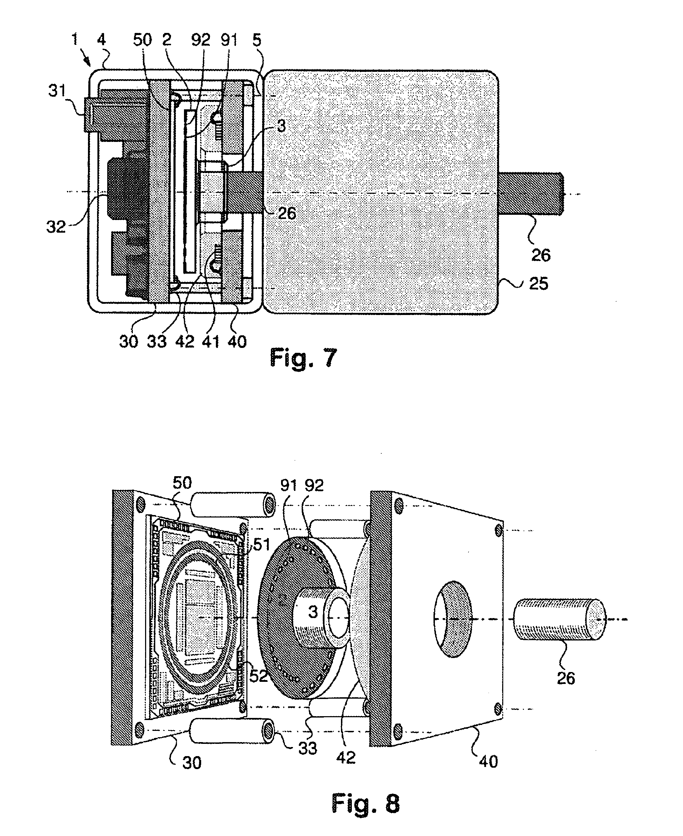

De manière non limitative, la figure 7 propose de réaliser l'éclairage sur un PCB 40, percé d'un trou pour permettre le passage de l'axe 26 du moteur 25. Sur ce PCB, est bondé un certain nombre de chip-LEDs 41 disposées selon un anneau, et recouvertes d'une couche optique 42 plus ou moins complexe, agencée de manière à homogénéiser la lumière pour l'éclairage du disque 2.

Une vue en perspective du capteur est donnée à la Figure 8 afin de mieux apprécier l'arrangement du dispositif disque de codage/capteur d'image.

La Figure 7 montre qu'un circuit 50 est directement bondé sur un PCB 30 (de l'anglais Printed Circuit Board), qui comporte lui-même, sur son autre face, un minimum de composants discrets impossible à mettre dans le circuit 50, tels qu'un connecteur, des capacités de découplage et un quartz car, comme on le comprendra ci-après, un tel système nécessite une base de temps précise.

Nous rappellerons que l'un des buts de l'invention est de permettre de mesurer des positions angulaires absolues à des vitesses de rotation allant jusqu'à 600'000 tours/min. Lorsque le disque tourne, il y a convolution temporelle du marquage en mouvement pendant le temps d'intégration (qui résulte en un flou de mouvement). Si le marquage est judicieusement choisi, il est théoriquement possible d'obtenir une image contenant l'information de la position du disque pour autant que le temps d'exposition soit inférieur à une rotation complète du disque. L'exemple le plus trivial est un marquage consistant en un seul point. La trace laissée par le point permet de déterminer le parcours du disque. Cependant, cette méthode ne permet pas d'interpolation et sa résolution est limitée au nombre de pixels effectif sur la circonférence du marquage.

Pour atteindre les vitesses de rotation souhaitées, la solution proposée selon l'invention se base sur deux mesures de positions effectuées sur la même image :

- d'une part une mesure approximative qui résiste à un flou de mouvement de l'ordre d'un demi-tour (c'est-à-dire le disque tourne d'un demi-tour pendant le temps d'exposition)
- d'autre part une mesure très précise de la position, par un calcul de phase basé sur un marquage périodique, mais qui n'est possible que lorsque le flou de mouvement est fortement réduit.

A la vitesse maximale de rotation, seule la première mesure est utilisée. En d'autres termes, on accepte que le capteur fournisse une résolution limitée au delà d'une certaine vitesse de rotation. En dessous de cette vitesse de transition, on utilise un signal périodique résultant du marquage pour interpoler la position angulaire par mesure de la phase du marquage en quadrature.

Plus le nombre de périodes p (ou répétitions d'une forme) sur le disque est important, meilleure est la précision de la mesure de phase du marquage périodique. De préférence, on utilise le nombre maximum de périodes sur toute la circonférence du marquage. C'est grâce à cette grande redondance (moyenne statistique) que la méthode de la mesure de phase en quadrature (QP) permet d'obtenir une grande résolution et une grande précision.

Rappelons qu'une mesure en quadrature s'effectue de la manière suivante. Soit D la distance entre les centres de 2 repères à laquelle correspond un angle $\alpha_{period}$, l'image du marquage $I$ est multipliée par un sinus et un cosinus. La phase $\alpha_p$ (c'est-à-dire la position au multiple d'une période près) se calcule de la manière suivante :

$$\begin{cases} S = \sum_{i=0}^{pD-1} I(i) \cdot \sin\left(\frac{i \cdot 360}{D}\right) \\ C = \sum_{i=0}^{pD-1} I(i) \cdot \cos\left(\frac{i \cdot 360}{D}\right) \\ \alpha_p = \operatorname{atan2}(S,C)/p \end{cases} \qquad (1)$$

où $p$ est le nombre de périodes sur le disque, qui est égal au nombre maximal théorique de repères, dans le cas d'une série continue, donné par $360/\alpha_{period}$, avec $\operatorname{atan2}(\sin(\alpha), \cos(\alpha)) = \alpha$ pour tout $\alpha$ dans $]{-}pi\,;\,pi]$.

Ainsi, la position $\alpha_p$ est une valeur dont la variation maximale correspond à l'angle entre deux repères d'identification.

La position (angulaire) absolue est donnée par $\alpha = k \cdot \dfrac{360}{p} + \alpha_p$, où $k$ est fourni par la mesure approximative de la position absolue $\hat{\alpha}$ de la manière suivante : $k = \arg\min_k \left| k \cdot \dfrac{360}{p} + \alpha_p - \hat{\alpha} \right|$.

En pratique, lorsque la mesure de phase est possible, il est parfois plus facile de calculer d'abord la mesure de phase et d'utiliser le résultat pour calculer la position approximative. En effet, cela permet d'aligner un détecteur de présence ou d'absence de repères sur la position des centres des repères.

Cela revient à estimer la valeur $k$ directement en utilisant le principe de la mesure de position approximative.

Afin de pouvoir qualifier quantitativement l'invention, il est nécessaire de définir certaines grandeurs. Bien que les vitesses de rotations N soient couramment mesurées en tours par minute (1/min), il est plus élégant pour la suite d'utiliser une mesure n en tours par secondes (1/s) :

$$n\ [1/s] = \frac{N}{60}\ [1/\min] \qquad (2)$$

Pour que le calcul de phase fonctionne, il suffit que l'image représente un signal périodique, que ce soit un carré, un sinus ou un triangle. Si on prend une image à l'arrêt, le signal sera carré (sous l'hypothèse implicite que le marquage périodique est fait d'une alternance de barres foncées et claires de même largeur). Lorsque le disque se met à tourner, les flancs du signal carré s'inclinent et le signal devient trapézoïdal. Lorsque le temps d'exposition $T_{exp}$ pour la prise d'image correspond exactement au déplacement d'une demi-période du marquage, on obtient un signal triangulaire d'amplitude maximum. C'est la limite théorique pour l'application de la méthode de mesure de phase en quadrature, car si on augmente encore la vitesse de rotation, l'amplitude du triangle va diminuer, puis passer par des valeurs nulles pour des déplacements égaux à un multiple de la période du marquage (phénomène de battements).

Comme on l'a vu plus haut, le moyen de prise d'image est constitué d'un anneau de pixels 11, 21 ou 22 faisant face au marquage. Le nombre de pixels $N_{pix}$ définit la résolution de l'image (c'est en fait une image unidimensionnelle de longueur $N_{pix}$ représentant la circonférence du marquage). Le pas de quantification angulaire $\alpha_{pix}$ en degrés est donc défini par :

$$\alpha_{pix} = \frac{360}{N_{pix}} \quad (3)$$

Le marquage est constitué d'un maximum de p barres radiales de même largeur angulaire $\alpha_{period}/2$. La périodicité angulaire du marquage $\alpha_{period}$ en degrés est donc définie par :

$$\alpha_{period} = \frac{360}{p} \quad (4)$$

Pour simplifier le système et les calculs (qui coûtent du temps et de l'énergie), il est conseillé que le nombre de pixels par période de marquage soit un nombre entier, si possible pair.

Dans notre exemple, $N_{pix}$ = 360 et $\alpha_{pix}$ = 1 degré. On rappelle que dans les figures, il n'y a que 180 pixels pour des raisons de lisibilité. Ce choix est bien adapté aux dimensions actuelles des pixels des DVS en technologie CMOS 0.18 $\mu$m. Comme on le verra plus loin dans la description des marquages, ce nombre a aussi l'avantage d'être divisible par 3.

Le nombre de repères p choisi est 30, ce qui nous donne une résolution D de 12 pixels par période de marquage.

Compte tenu de la remarque ci-dessus selon laquelle la méthode de mesure de phase en quadrature QP fonctionne encore lorsque le marquage s'est déplacé d'une demi-période pendant le temps d'exposition $T_{exp}$ d'une prise d'image, on peut poser :

$$T_{exp\_max\_QP} = \frac{1}{2 \cdot n_{max} \cdot p} \quad (5)$$

Ce qui donne un temps d'exposition maximum admissible pour effectuer la mesure QP $T_{exp\_max\_QP}$ = 1.67 $\mu$s à la vitesse de 10'000 tours/s ou 600'000 tours/min considérée dans notre exemple. Ce court temps d'exposition est théoriquement possible avec les DVS actuels.

Idéalement, on obtient la plus grande précision dans la mesure de phase avec, à chaque période, un repère occupant la moitié de cette période. Cependant, il faut un moyen robuste de détecter précisément la position absolue du disque. Il est avantageusement proposé d'utiliser un motif comportant une particularité directionnelle, tout en maintenant la plus grande régularité possible.

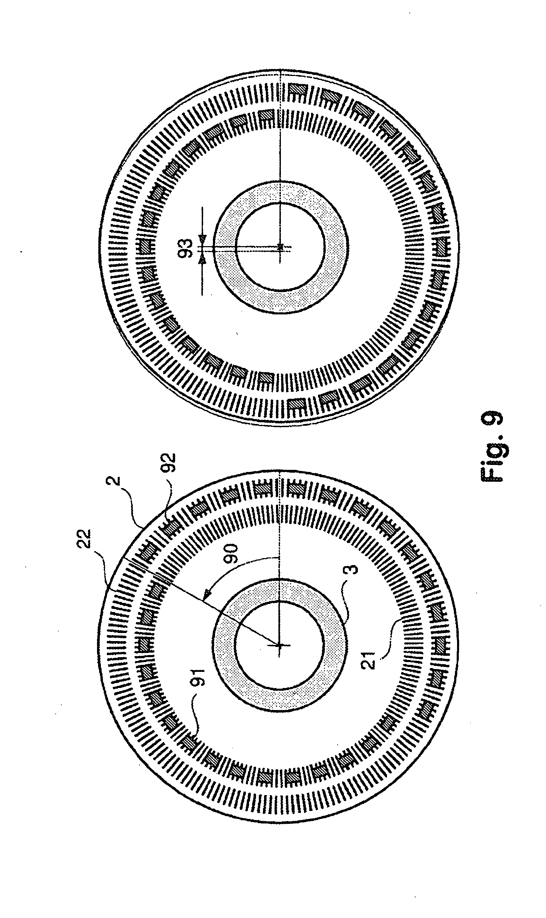

Il existe plusieurs possibilités de combiner des séries de repères pour rendre identifiable la position absolue du disque 90 sur un tour complet, mais il faut conserver autant que possible une symétrie radiale pour profiter d'une compensation implicite d'une erreur d'alignement des axes dans la mesure de phase en quadrature QP. Avec deux anneaux de marquages, une première solution permettant de satisfaire ces critères est montrée à la Figure 9.

Avec ce double marquage comprenant chacun la moitié des repères possibles sur respectivement deux demi-cercles opposés 91 et 92, on a effectivement un tour complet pour effectuer la mesure de phase en quadrature QP. Un double marquage ne tolère qu'un faible désaxage 93 entre le disque 2 et le capteur 50. En effet, le désaxage 93 ne peut pas dépasser la moitié de la différence entre la longueur des photodiodes et la largeur des marquages.

La compensation implicite du désaxage 93 peut s'expliquer qualitativement en se référant à la partie de droite de la Figure 9. Le désaxage tel que dessiné est horizontal, selon l'axe des x. Les repères qui se trouvent à droite apparaissent trop étroits par rapport au pas des photodiodes ; on peut aussi dire qu'il y a une déviation en fréquence positif, la fréquence des repères apparaît trop élevée. L'inverse est vrai pour les repères de gauche, la fréquence des repères apparaît trop faible. Dans les deux cas, il n'y a pas d'erreur de phase, contrairement aux repères du haut et du bas. Si la rotation se fait dans le sens trigonométrique, les repères du haut présentent un retard de phase, alors que les repères du bas présentent une avance de phase. En fait, globalement sur un tour complet, il y a une modulation de la phase dont la somme est globalement nulle. Les maxima de cette modulation de phase ont lieu selon l'axe perpendiculaire au désaxage. A ces endroits les repères sont centrés sur le centre des photodiodes (rayons médian des anneaux de photodiodes) et il n'y a pas de déviation en fréquence.

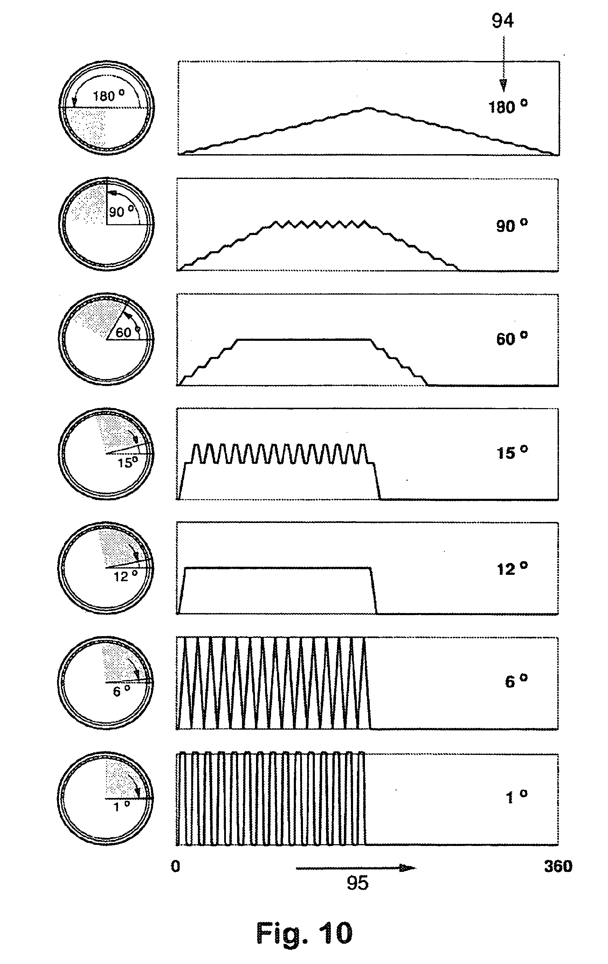

La Figure 10 montre l'image « déroulée » d'un anneau de photodiodes pour différentes vitesses de rotation, et illustre le phénomène du flou de mouvement. La première ligne de la figure montre un flou de mouvement maximal (de 180°), alors que la dernière illustre un flou de mouvement presque imperceptible (de 1 °). L'image de l'autre anneau de photodiodes est similaire mais décalée de 180°. L'abscisse 95 identifie l'index des pixels, qui se confond dans notre exemple avec l'angle de rotation puisque $N_{pix}$ = 360. Soit le temps d'exposition maximal pour l'application de la méthode QP $T_{exp\_max\_QP}$ = 1.67 μs, donné par la relation (5), avec $n_{max}$ = 10'000 tours/s et *p* = 30. Ce temps d'exposition relativement court est le maximum à ne pas dépasser si on veut appliquer la mesure de phase QP à la vitesse maximale $n_{max}$.

Avec le marquage proposé, dans les situations où on renonce à la mesure précise de la position, on peut tourner 30 fois plus vite, ou augmenter le temps d'exposition d'un facteur 30. Pour illustrer ce qui se passe prenons un temps d'exposition $T_{exp\_fix}$ = 50 μs, qui correspond à un demi tour de rotation du disque à la vitesse $n_{max}$ = 10'000 tours/s.

A la Figure 10, l'angle repéré par le chiffre 94 correspond à la rotation du disque effectuée pendant $T_{exp\_fix}$. Le temps d'exposition est fixe et l'intensité lumineuse aussi. A 180°, le disque a fait exactement un demi-tour à la vitesse maximale, la convolution temporelle (c'est-à-dire le flou de mouvement) donne une image en forme de triangle. Si on diminue la vitesse, le triangle se transforme en trapèze, jusqu'à devenir quasi carré lorsque le déplacement du disque n'est plus que de 12°. Au passage, on constate l'empreinte du marquage périodique, qui diminue d'amplitude avec la vitesse et qui s'annule pour les angles de rotations multiple de 12° = 12 pixels = période des repères.

En dessous d'un déplacement angulaire de 6°, ce qui correspond à une demi-période du marquage, on peut exploiter l'image pour le calcul de phase en quadrature QP.

Il est à noter que le principe du calcul de phase en quadrature QP peut également être appliqué à la première mesure de position approximative. Il suffit d'utiliser des signaux sinus-cosinus de période égale à un tour complet du cercle, c'est à dire avec D égale à la moitié de la circonférence du disque, c'est-à-dire égale à la distance séparant deux séries de repères. Cela revient à considérer la série de repères comme un seul élément de marquage. On peut alors utiliser

$$\begin{cases} S = \sum_{i=0}^{mG-1} I(i) \cdot \sin\left(\frac{i \cdot 360}{G}\right) \\ C = \sum_{i=0}^{mG-1} I(i) \cdot \cos\left(\frac{i \cdot 360}{G}\right) \\ \hat{\alpha} = \text{atan2}(S, C)/m \end{cases}$$

où m est le nombre séries de repères d'identification, *I* est l'image du marquage et G est la distance séparant deux séries de repères.

Par ailleurs, il est possible d'utiliser des marquages dont les séries de repères sont disposées sur un seul rayon, ce qui permet de tolérer un plus grand désaxage entre le disque et l'anneau de photodiodes.

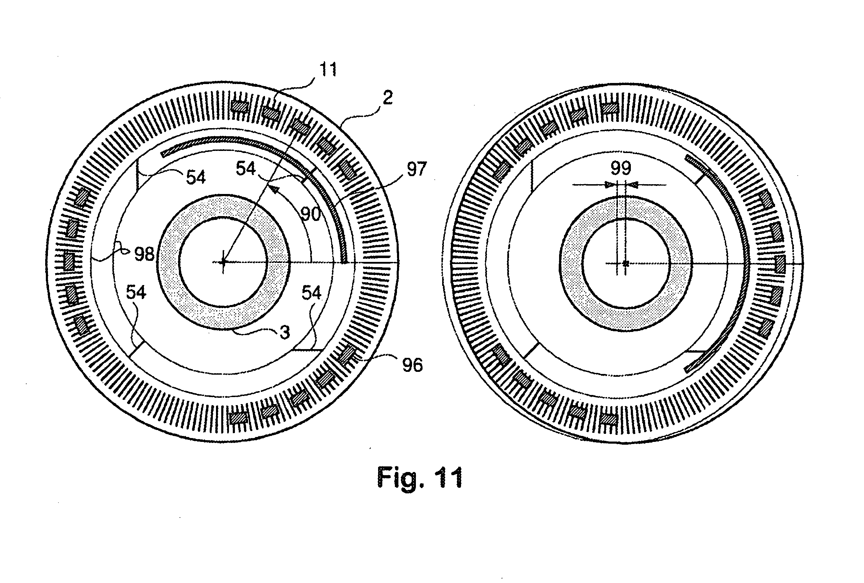

Le marquage 96 sur un seul rayon de la Figure 11 comporte trois séries exactement identiques de 5 repères pour un maximum de régularité dans la mesure de phase QP. Il est donc nécessaire d'ajouter un marquage de référence 97 pour identifier la position absolue du disque 2 sur un tour complet. Cependant, comme on peut le constater sur le dessin, ce marquage de référence ne nécessite que 4 photodiodes 54 disposées à 90° l'une de l'autre et inscrites dans un anneau 98. Il est clair que ces 4 photodiodes prennent beaucoup moins de place qu'un second anneau complet de photodiodes, comme à la Figure 9. De plus, ces 4 photodiodes n'étant utilisées que pour une détection logique (présence ou absence du marquage 97), elles peuvent prendre chacune une forme différente, qui s'adapte à la circuiterie environnante. A titre d'exemple, la Figure 11 montre 2 photodiodes radiales dans les quadrants I et III, une photodiode verticale dans le quadrant II et une photodiode horizontale dans le quadrant IV. Plus généralement, le capteur d'image comprend z photodiodes régulièrement réparties selon l'anneau 98 situé en regard du marquage de référence, où z est plus grand ou égal au nombre de séries de repères du marquage 96. Le marquage de référence étant en forme d'arc dé cercle, dont l'angle au centre est compris entre *]360/z* et *720/z[,* les bornes étant exclues pour éviter les indéterminations.

On constate toutefois que le doublement du désaxage admissible avec le marquage à un seul anneau se fait au détriment de la précision, car on effectue le calcul de phase QP avec la moitié des périodes et des déviations en phase et en fréquences plus élevés.

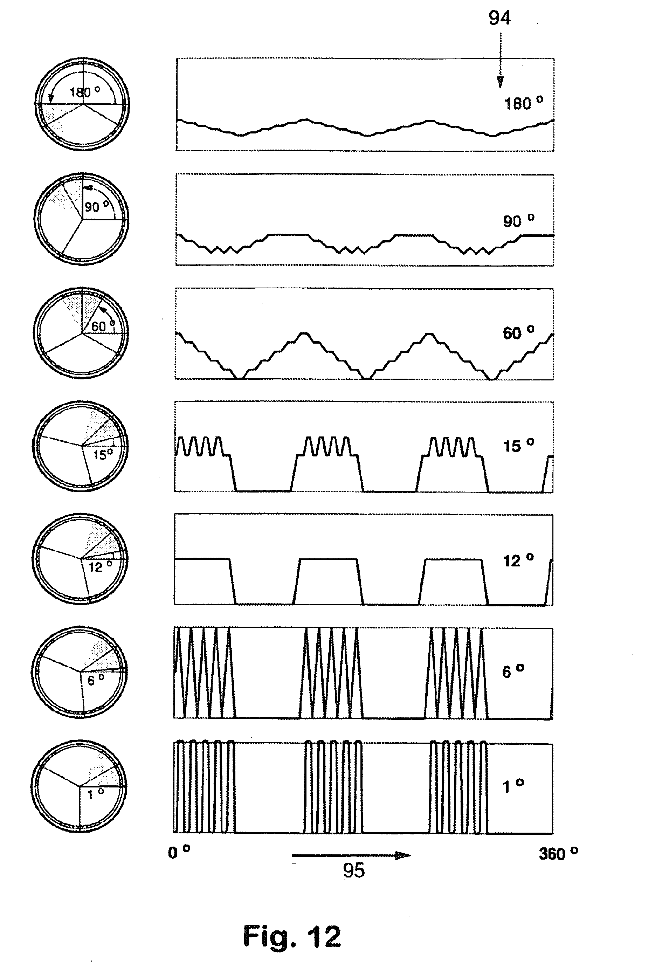

La Figure 12 montre l'image « déroulée » de l'anneau de photodiodes pour différentes vitesses de rotation. L'abscisse 95 dénote l'index du pixel, qui se confond dans notre cas avec l'angle de rotation puisque $N_{pix}$ = 360. Soit $T_{exp\_max\_QP}$ = 1.67 μs donné par la relation (5), avec $n_{max}$ = 10'000 tours/s et *p* = 30. Ce temps d'exposition est le maximum à ne pas dépasser si on veut appliquer la mesure de phase QP à la vitesse maximale $n_{max}$. Cette situation

est identique à celle du double marquage.

Par contre, avec le marquage à un seul anneau, on ne peut que, soit tourner 10 fois plus vite, soit augmenter le temps d'exposition d'un facteur 10. En effet, comparé au double marquage, le temps d'exposition pour la prise d'image ne peut pas dépasser un sixième de tour ou 60°.

Pour illustrer ce qui se passe, prenons un temps d'exposition fixe 10 fois plus long $T_{exp\_fix}$ = 16.7 µs, qui correspond exactement à un sixième de tour de rotation du disque à la vitesse $n_{max}$ = 10'000 tours/s.

A la Figure 12, l'angle repéré par le chiffre 94 correspond à la rotation du disque effectuée pendant $T_{exp\_fix}$. Le temps d'exposition est fixe et l'intensité lumineuse aussi. A 60°, le disque a fait exactement un sixième de tour à la vitesse maximale, la convolution temporelle donne une image en forme de triangle.

A part le fait qu'il n'est pas possible d'utiliser le signal en deçà d'un sixième tour de rotation du disque, le système se comporte de la même manière que dans le cas du double marquage. A temps d'exposition fixé, le gain en vitesse de rotation est donc trois fois plus faible.

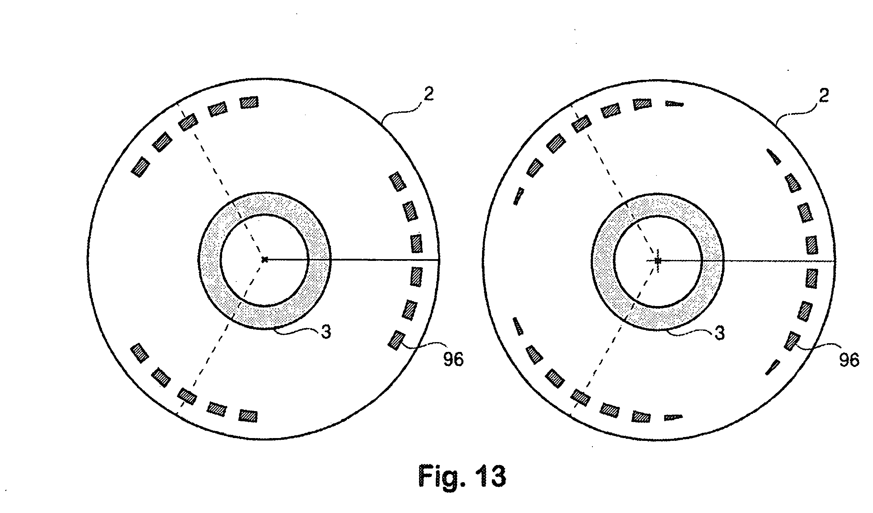

Dans le but d'éviter de disposer un marquage de référence, on peut modifier quelque peu le marquage de la Figure 11 pour obtenir un élément de référence et le rendre identifiable sur un tour complet. La Figure 13 propose une possibilité simple qui consiste à remplacer une des séries de 5 repères par une série de 6 repères décalés de 180°. Ceci ne modifie pas trop l'équilibre radial nécessaire à la compensation du désaxage, et l'augmentation de 20 % de la largeur du marquage à 6 repères par rapport aux marquages à 5 repères est largement suffisante pour être identifiable de manière robuste.

La mesure de phase en quadrature QP peut présenter des erreurs à cause des déviations en fréquence lorsqu'on effectue la mesure sur un nombre fini de périodes séparées par des espaces, ce qui est le cas pour les marquages à un seul anneau. Le problème vient du fait qu'en cas de déviation de fréquence, le nombre de périodes du signal n'est plus égal à un nombre entier de la période des signaux sinus et cosinus de référence. Dans le cas du marquage à deux anneaux, grâce à la concaténation des deux demi-tours, on obtient un cercle de 30 maques sans interruption, et le nombre de périodes du marquage est toujours égal au nombre de période des signaux de référence.

Pour palier ce problème, il est avantageux de réduire progressivement l'amplitude des repères aux extrémités d'une série de repères, comme indiqué sur le disque de droite de la Figure 13. Pour ce faire, un repère a été rajouté à chaque extrémité, et la réduction de largeur des repères s'effectue progressivement sur les deux derniers repères

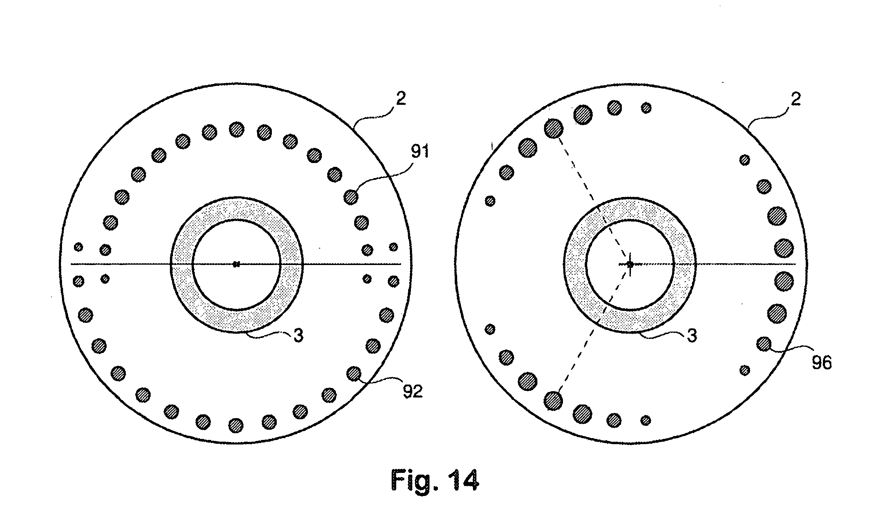

Il peut être avantageux, dans le cadre de la présente invention, de fabriquer les disques encodeurs entièrement métalliques, en utilisant des techniques horlogères bien connues. Dans ce cas, il est difficile de faire des repères de formes compliquées, et le plus simple est de réaliser le marquage à l'aide de trous. A la Figure 14, on a montré deux versions possibles de marquages à trous, le premier étant inspiré du double marquage décrit à la Figure 9, et le second étant inspiré du marquage décrit à la Figure 13. Dans les deux cas, une diminution progressive de l'amplitude des repères est effectuée en utilisant des trous de plus petit diamètre aux extrémités des séries de repères.

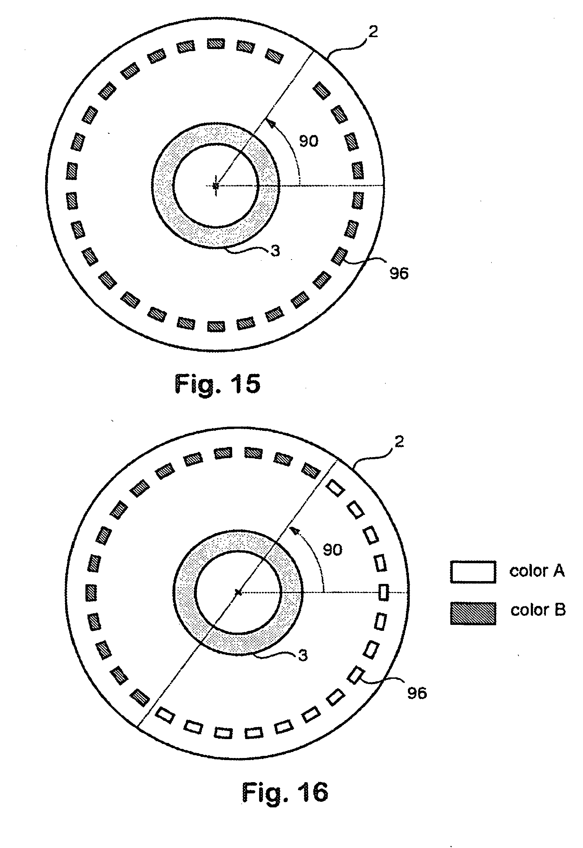

Les figures 14 et 15 montrent deux exemples supplémentaires de marquage pouvant être utilisés selon l'invention. Le marquage de la figure 14 ne comporte qu'une série de repères d'identification, la série étant munie d'un élément de référence permettant de discriminer la position de la série. L'élément de référence peut être réalisé en ayant deux repères consécutifs séparés par un angle différent de $\alpha_{period}$. Sur la figure 15, le marquage comporte une série de repères d'identification, dont l'élément de référence est un contraste dans la couleur des repères. Dans l'exemple proposé, les repères sont divisés en une première moitié de repères consécutifs, réalisés d'une première couleur, et en une deuxième moitié de repères consécutifs, réalisés d'une deuxième couleur.

Il apparaît dans les exemples ci-dessus, que le principe de mesure est conditionné par le temps d'exposition pour la prise d'image du marquage, dans le sens que ce temps introduit un retard qui se traduit par un angle de rotation différent suivant la vitesse de rotation du disque, angle qui doit être précisément connu pour prédire la position du disque au moment de l'envoi des données. Par conséquent, l'implémentation préférentielle de capteur utilise un temps d'exposition fixe, de valeur précise, et le système nécessite donc une base de temps précise, par exemple un oscillateur à quartz.

Le temps d'exposition pour la prise d'image étant fixé, il faut un moyen pour assurer que l'image obtenue occupe toute la plage de fonctionnement du capteur d'image afin d'obtenir la plus grande précision. La seule possibilité pour satisfaire cette condition est d'asservir le courant des LEDs pour ajuster l'intensité lumineuse.

On pourra remarquer qu'une part importante de la consommation du capteur est due à l'éclairage. Il faut cependant préciser que, pour une fréquence de mesure donnée, c'est-à-dire pour un nombre d'images par seconde donné, le temps d'intégration choisi n'a aucune influence sur cette consommation. En effet, si on diminue le temps d'intégration dans une certaine proportion, il faudra augmenter le courant de LED dans la même proportion. Au niveau des pixels, les photodiodes devront recevoir le même nombre de photons de sorte que le produit « temps d'exposition » fois « intensité lumineuse » est constant.

En résumé, pour une fréquence de mesure donnée, les seules possibilités de réduire la consommation dévolue à l'éclairage sont l'augmentation du rendement du système d'éclairage (que ce soit celui des LEDs ou des moyens de transmission de la lumière), ou l'augmentation de la sensibilité du capteur d'image.

La structure du capteur, dont le moyen d'éclairage est fixe par rapport au moyen de capture d'image, et dont la lumière est transmise par transparence, rend possible une calibration globale pour annuler les défauts cumulés des moyens de capture d'image. Pour cela, il suffit de rendre le disque « transparent » en diminuant fortement l'illumination pendant que le disque effectue plusieurs tours à vitesse constante. Dans ce cas, l'image acquise devrait être parfaitement uniforme pour autant que le nombre de tours effectués par le disque soit entier. Cependant, les non-uniformités de l'éclairage, ainsi que les offsets et erreurs de gain des pixels vont produire une image non-uniforme qui contient implicitement l'effet des défauts susmentionnés. Plus précisément, afin de pouvoir effectuer des corrections d'offsets et de gains, il faut acquérir deux images, une à mi-échelle et l'autre à pleine échelle, puis décorréler les deux effets pour chacun des pixels afin de calculer les corrections correspondantes.

Un moyen plus complexe d'effectuer la calibration du capteur, dans le cas où ce dernier doit être fonctionnel en permanence, consiste à mémoriser adaptativement et localement le maximum du signal reçu par chaque pixel, de sorte à reconstituer dynamiquement le profil de l'éclairage.

D'un point de vue pratique, pour effectuer les corrections en temps réel sur le circuit, sans surcharger le calculateur, il faudra prévoir deux mots de RAM supplémentaires par pixel, un pour stocker l'offset et l'autre pour stocker la correction de gain, puis effectuer directement l'addition et la multiplication associées à ces corrections, à l'aide d'un circuit câblé, au moment de la lecture de l'image.

Grâce à la méthode et aux marquages proposés, on peut réaliser des disques de marquage de petite taille, tout en gardant une précision suffisante dans la détermination de la position angulaire. Cette petite taille du disque de marquage permet d'une part de réaliser un capteur de position angulaire absolue dont les très petites dimensions des éléments permettent de réaliser des capteurs de taille extrêmement réduite, avec très peu de pièces, notamment sans optique. D'autre part, cette petite taille du disque de marquage permet d'effectuer des mesures à des vitesses de rotation beaucoup plus élevées que les dispositifs de l'état de la technique (600'000 tours par min, contre environ 12'000 tours par min pour les dispositifs connus actuellement). Comme montré dans l'exemple décrit en détail, le capteur est monté directement sur le moteur. Dans un tel cas, il n'y a pas de pièces d'usure et pas de frottements. En outre, le capteur étant très petit, il peut être monté dans un boîtier plus grand qui comprend un adaptateur pour la fixation sur des moteurs de plus grande taille. L'universalité et les capacités du capteur, grâce à ses performances maximales et son coût réduit, permet de remplacer toute une gamme de capteurs, grâce à des performances supérieures. Enfin, on notera que le capteur peut être calibré en fonction de l'application finale.

**Revendications**

**1.** Dispositif de mesure de la position angulaire d'un rotor comprenant

- un disque de marquage destiné à être monté concentriquement sur le rotor, ledit disque de marquage étant doté d'un marquage formé de repères d'identification régulièrement espacés les uns des autres selon une première période définissant un angle $\alpha_{period}$ séparant les centres de deux repères consécutifs, lesdits repères étant disposés concentriquement au disque pour former au moins une série comprenant un élément de référence,

- un capteur d'image doté de photodiodes réparties angulairement pour former au moins un anneau situé, en regard des repères d'identification et susceptible d'acquérir instantanément une image de la totalité desdits repères d'identification,

- des moyens de calculs susceptibles de

o effectuer une mesure approximative $\hat{\alpha}$ considérant la position de la série de repères du marquage comme élément caractéristique de la position du disque,

o effectuer une mesure précise $\alpha_p$ de la position considérant la périodicité des repères comme élément caractéristique, ladite mesure précise étant obtenue par un calcul de phase en quadrature, selon

$$\begin{cases} S = \sum_{i=0}^{pD-1} I(i) \cdot \sin\left(\frac{i \cdot 360}{D}\right) \\ C = \sum_{i=0}^{pD-1} I(i) \cdot \cos\left(\frac{i \cdot 360}{D}\right) \\ \alpha_p = \mathrm{atan2}(S,C)/p \end{cases}$$

où $p$ est le nombre de périodes d'identification donné par $360/\alpha_{period}$, $I$ est l'image du marquage et $D$ est la distance en pixels entre les centres de deux repères d'identification d'une même série,
lesdits moyens de calculs étant en outre programmés pour effectuer une mesure approximative et une mesure précise et combiner la mesure approximative et la mesure précise pour obtenir la position angulaire définitive, lorsque ledit disque de marquage effectue un déplacement inférieur à une demi-période du marquage lors de l'acquisition d'une image par le capteur d'images.

2. Dispositif selon la revendication 1, **caractérisé en ce que** les moyens de calculs sont en outre programmés pour n'effectuer qu'une mesure approximative lorsque ledit disque de marquage effectue un déplacement supérieur à une demi-période du marquage lors de l'acquisition d'une image par le capteur d'images.

3. Dispositif selon l'une des revendications 1 et 2, **caractérisé en ce que** les moyens de calculs sont programmés de manière à effectuer ladite mesure approximative selon un calcul de phase en quadrature

$$\begin{cases} S = \sum_{i=0}^{mG-1} I(i) \cdot \sin\left(\frac{i \cdot 360}{G}\right) \\ C = \sum_{i=0}^{mG-1} I(i) \cdot \cos\left(\frac{i \cdot 360}{G}\right) \\ \hat{\alpha} = \mathrm{atan2}(S,C)/m \end{cases}$$

où $m$ est le nombre séries de repères d'identification, $I$ est l'image du marquage et G est la distance séparant deux séries de repères.

4. Dispositif selon l'une des revendications 1 à 3, **caractérisé en ce que** lesdits repères du disque de marquage sont agencés en une pluralité de séries, lesdites séries étant uniformément réparties angulairement selon une deuxième période différente de la première et séparées par un secteur sans repères.

5. Dispositif selon la revendication 4, **caractérisé en ce que** ledit marquage comprend des séries de repères disposés selon un premier et un deuxième rayons, et **en ce que** le capteur d'image comporte deux anneaux concentriques de photodiodes respectivement agencés en regard des séries de repères disposées selon le premier et le deuxième rayons.

6. Dispositif selon la revendication 4, **caractérisé en ce que** ledit marquage comprend des séries de repères disposés selon un seul premier rayon et un élément de référence, et **en ce que** le capteur d'image comporte un seul anneau de photodiodes agencé en regard desdites séries de repères.

7. Dispositif selon la revendication 6, **caractérisé en ce que** lesdites séries sont identiques et **en ce que** ledit élément de référence est un marquage de référence ajouté selon un second rayon différent du premier, et **en ce que** le capteur d'image comprend $z$ photodiodes régulièrement réparties selon un anneau situé en regard du marquage de référence, le marquage de référence étant en forme d'arc de cercle, dont l'angle au centre est compris entre ] $360/z$ et $720/z$[, le nombre z étant plus grand ou égal au nombre des dites séries.

8. Dispositif selon la revendication 6, **caractérisé en ce que** l'élément de référence est une différenciation de l'une des séries de repères par l'ajout ou la suppression de l'un des repères, la répartition angulaire desdites séries ayant pour conséquence le décalage de phase de 180° de la série différenciée.

9. Dispositif selon la revendication 8, **caractérisé en ce que** l'amplitude des repères aux extrémités d'une série de repères est réduite progressivement.

10. Dispositif selon l'une des revendications précédentes, **caractérisé en ce que** les repères sont des marques colorées de manière à présenter un contraste détectables par le capteur d'image.

11. Dispositif selon l'une des revendications 1 à 10, **caractérisé en ce que** les repères sont des trous.

**12.** Dispositif selon l'une des revendications précédentes, dans lequel le ou les anneau(x) de photodiodes sont agencés sur un circuit électronique, **caractérisé en ce que** le circuit comporte des composants électroniques montés à l'intérieur du plus petit des anneaux, lesdits composants étant connectés avec l'extérieur de l'anneau par une connexion blindée.

**13.** Méthode de mesure de la position angulaire d'un rotor muni d'un disque de marquage monté concentriquement sur le rotor, ledit disque de marquage étant doté d'un marquage formé de repères d'identification, régulièrement espacés les uns des autres selon une première période définissant un angle $\alpha_{period}$ séparant les centres de deux repères consécutifs, lesdits repères étant disposés concentriquement au disque, pour former au moins une série de repères comprenant un élément de référence,
**caractérisé en ce que** la méthode consiste, lorsque ledit disque de marquage effectue un déplacement inférieur à une demi-période du marquage lors de l'acquisition d'une image par le capteur d'images, à effectuer une mesure approximative considérant les séries du marquage comme élément caractéristique de la position du disque et combiner cette mesure approximative avec une mesure précise de la position considérant la périodicité des repères comme élément caractéristique, ladite mesure précise étant obtenue par un calcul de phase en quadrature, selon

$$\begin{cases} S = \sum_{i=0}^{pD-1} I(i) \cdot \sin\left(\frac{i \cdot 360}{D}\right) \\ C = \sum_{i=0}^{pD-1} I(i) \cdot \cos\left(\frac{i \cdot 360}{D}\right) \\ \alpha_p = \operatorname{atan2}(S, C) / p \end{cases}$$

où p est le nombre de périodes d'identification donné par $360/\alpha_{period}$, $I$ est l'image du marquage et D est la distance en pixels entre les centres de deux repères d'identification d'une même série.

**14.** Méthode selon la revendication 13, **caractérisé en ce qu'**elle consiste, en outre, lorsque ledit disque de marquage effectue un déplacement supérieur à une demi-période du marquage lors de l'acquisition d'une image par le capteur d'images, à n'effectuer qu'une mesure approximative considérant la position de la série de repères comme élément caractéristique de la position du disque.

**Patentansprüche**

**1.** Vorrichtung zur Messung der Winkellage eines Rotors, die umfasst:

- eine Markierungsscheibe, die für eine konzentrische Montage auf dem Rotor bestimmt ist, wobei die Markierungsscheibe mit einer Markierung ausgestattet ist, die von Identifikationsmarken gebildet wird, die gemäß einer ersten Periode, die einen Winkel $\alpha_{period}$ bildet, der die Zentren von zwei aufeinanderfolgenden Marken trennt, gleichmäßig voneinander beabstandet sind, wobei die Marken konzentrisch auf der Scheibe angeordnet sind, um mindestens eine Serie zu bilden, die ein Referenzelement umfasst,
- einen Bildsensor, der mit winklig angeordneten Fotodioden ausgestattet ist, um mindestens einen Ring zu bilden, der sich gegenüber den Identifikationsmarken befindet imstande ist, sofort ein Bild der Gesamtheit der Identifikationsmarken zu erfassen,
- Berechnungsmittel, die imstande sind,

o eine Näherungsmessung $\hat{\alpha}$ durchzuführen, bei der die Lage der Markenserie der Markierung als kennzeichnendes Element der Lage der Scheibe betrachtet wird,
o eine Präzisionsmessung $\alpha_p$ der Lage durchzuführen, bei der die Periodizität der Marken als kennzeichnendes Element betrachtet wird, gemäß

$$\begin{cases} S = \sum_{i=0}^{pD-1} I(i) \cdot \sin\left(\frac{i \cdot 360}{D}\right) \\ C = \sum_{i=0}^{pD-1} I(i) \cdot \cos\left(\frac{i \cdot 360}{D}\right) \\ \alpha_p = \mathrm{atan2}(S,C)/p \end{cases}$$

wobei p die Anzahl der Identifikationsperioden ist, die von $360/\alpha_{period}$ gegeben wird, I das Bild der Markierung ist und D der Abstand in Pixel zwischen den Zentren von zwei Identifikationsmarken einer selben Serie ist, wobei die Berechnungsmittel ferner programmiert sind, um eine Näherungsmessung und eine Präzisionsmessung durchzuführen und die Näherungsmessung und die Präzisionsmessung zu kombinieren, um die endgültige Winkellage zu erhalten, wenn die Markierungsscheibe bei der Erfassung eines Bilds durch den Bildsensor eine Verlagerung unter einer halben Periode der Markierung durchführt.

2. Vorrichtung nach Anspruch 1, **dadurch gekennzeichnet, dass** die Berechnungsmittel ferner programmiert sind, um nur dann eine Näherungsmessung durchzuführen, wenn die Markierungsscheibe bei der Erfassung eines Bilds durch den Bildsensor eine Verlagerung über einer halben Periode der Markierung durchführt.

3. Vorrichtung nach einem der Ansprüche 1 und 2, **dadurch gekennzeichnet, dass** die Berechnungsmittel derart programmiert sind, um die Näherungsmessung gemäß einer Quadratur-Phasenberechnung durchzuführen

$$\begin{cases} S = \sum_{i=0}^{mG-1} I(i) \cdot \sin\left(\frac{i \cdot 360}{G}\right) \\ C = \sum_{i=0}^{mG-1} I(i) \cdot \cos\left(\frac{i \cdot 360}{G}\right) \\ \hat{\alpha} = \mathrm{atan2}(S,C)/m \end{cases}$$

wobei m die Anzahl der Serien von Identifikationsmarken ist, I das Bild der Markierung ist und G der Abstand ist, der zwei Markenserien trennt.

4. Vorrichtung nach einem der Ansprüche 1 bis 3, **dadurch gekennzeichnet, dass** die Marken der Markierungsscheibe in einer Vielzahl von Serien ausgebildet sind, wobei die Serien gemäß einer zweiten Periode, die sich von der ersten unterscheidet, winklig gleichmäßig verteilt und von einem Sektor ohne Marken getrennt sind.

5. Vorrichtung nach Anspruch 4, **dadurch gekennzeichnet, dass** die Markierung Markenserien umfasst, die gemäß einem ersten und einem zweite Radius angeordnet sind, und dass der Bildsensor zwei konzentrische Fotodiodenringe aufweist, die jeweils gegenüber den Markenserien ausgebildet sind, die gemäß dem ersten und zweiten Radius angeordnet sind.

6. Vorrichtung nach Anspruch 4, **dadurch gekennzeichnet, dass** die Markierung Markenserien, die gemäß einem einzigen ersten Radius angeordnet sind, und ein Referenzelement umfasst, und dass der Bildsensor einen einzigen Fotodiodenring aufweist, der gegenüber den Markenserien ausgebildet ist.

7. Vorrichtung nach Anspruch 6, **dadurch gekennzeichnet, dass** die Serien identisch sind und dass das Referenzelement eine Referenzmarkierung ist, die gemäß einem zweiten Radius, der sich vom ersten unterscheidet, hinzugefügt ist, und dass der Bildsensor z Fotodioden umfasst, die gemäß einem Ring, der sich gegenüber der Referenzmarkierung befindet, gleichmäßig verteilt sind, wobei die Referenzmarkierung kreisbogenförmig ist mit einem Winkel im Zentrum zwischen ]360/z und 720/z[ inklusive, wobei die Zahl z größer oder gleich der Anzahl der Serien ist.

**8.** Vorrichtung nach Anspruch 6, **dadurch gekennzeichnet, dass** das Referenzelement eine Differenzierung einer der Markenserien durch Hinzufügen oder Unterdrücken einer der Marken ist, wobei die Winkelverteilung der Serien die Phasenverschiebung um 180° der differenzierten Serie zur Folge hat.

**9.** Vorrichtung nach Anspruch 8, **dadurch gekennzeichnet, dass** die Amplitude der Marken an den Enden einer Markenserie schrittweise reduziert ist.

**10.** Vorrichtung nach einem der vorangehenden Ansprüche, **dadurch gekennzeichnet, dass** die Marken Kennzeichen sind, die derart gefärbt sind, dass ein vom Bildsensor wahrnehmbarer Kontrast entsteht.

**11.** Vorrichtung nach einem der Ansprüche 1 bis 10, **dadurch gekennzeichnet, dass** die Marken Löcher sind.

**12.** Vorrichtung nach einem der vorangehenden Ansprüche, wobei der oder die Fotodiodenring(e) auf einem elektronischen Schaltkreis ausgebildet ist/sind, **dadurch gekennzeichnet, dass** der Schaltkreis elektronische Bauteile aufweist, die im kleinsten der Ringe montiert sind, wobei die Bauteile mit dem Äußeren des Rings anhand einer abgeschirmten Verbindung verbunden sind.

**13.** Messmethode der Winkellage eines Rotors, der mit einer konzentrisch auf dem Rotor montierten Markierungsscheibe ausgestattet ist, wobei die Markierungsscheibe mit einer Markierung ausgestattet ist, die von Identifikationsmarken gebildet wird, die gemäß einer ersten Periode, die einen Winkel $\alpha_{period}$ bildet, der die Zentren von zwei aufeinanderfolgenden Marken trennt, gleichmäßig voneinander beabstandet sind, wobei die Marken konzentrisch auf der Scheibe angeordnet sind, um mindestens eine Markenserie zu bilden, die ein Referenzelement umfasst, **dadurch gekennzeichnet, dass** die Methode darin besteht, wenn die Markierungsscheibe bei der Erfassung eines Bilds durch den Bildsensor eine Verlagerung unter einer halben Periode der Marke durchführt, eine Näherungsmessung durchzuführen, die die Serien der Markierung als kennzeichnendes Element der Scheibe betrachtet und diese Näherungsmessung mit einer Präzisionsmessung der Lage zu kombinieren, die die Periodizität der Marken als kennzeichnendes Element betrachtet, wobei die Präzisionsmessung durch eine Qudratur-Phasenberechnung erhalten wird, gemäß

$$\begin{cases} S = \sum_{i=0}^{pD-1} I(i) \cdot \sin\left(\frac{i \cdot 360}{D}\right) \\ C = \sum_{i=0}^{pD-1} I(i) \cdot \cos\left(\frac{i \cdot 360}{D}\right) \\ \alpha_p = \operatorname{atan2}(S,C)/p \end{cases}$$

wobei p die Anzahl der Identifikationsperioden ist, die von $360/\alpha_{period}$ gegeben wird, I das Bild der Markierung ist und D der Abstand in Pixel zwischen den Zentren von zwei Identifikationsmarken einer selben Serie ist.

**14.** Methode nach Anspruch 13, **dadurch gekennzeichnet, dass** sie ferner darin besteht, wenn die Markierungsscheibe bei der Erfassung eines Bilds durch den Bildsensor eine Verlagerung über einer halben Periode der Markierung durchführt, nur eine Näherungsmessung durchzuführen, wobei die Lage der Markenserie als kennzeichnendes Element der Lage der Scheibe betrachtet wird.

**Claims**

**1.** Device for measuring the angular position of a rotor, comprising

- a marking disk designed to be mounted concentrically on the rotor, said marking disk being provided with a marking made up of identification references regularly spaced apart from one another according to a first period defining an angle $\alpha_{period}$ separating the centers of two consecutive references, said references being positioned concentrically to the disk to form at least one series comprising a reference element,
- an image sensor equipped with photodiodes angularly distributed to form at least one ring situated across from the identification references and capable of instantaneously acquiring an image of all of said identification references,
- calculation means capable of

○ performing an approximate measurement $\hat{\alpha}$ considering the position of the series of references of the marking as a characteristic element of the position of the disk,
○ performing a precise measurement $\alpha_p$ of the position considering the frequency of the references as a characteristic element, said precise measurement being obtained using a phase calculation in quadrature, according to

$$\left\{\begin{array}{l} S = \sum_{i=0}^{pD-1} I(i) \cdot \sin\left(\frac{i \cdot 360}{D}\right) \\ C = \sum_{i=0}^{pD-1} I(i) \cdot \cos\left(\frac{i \cdot 360}{D}\right) \\ \alpha_p = \mathrm{atan2}(S,C)/p \end{array}\right.$$

where p is the number of identification periods given by $360/\alpha_{period}$, I is the image of the marking, and D is the distance in pixels between the centers of two identification references of a same series,
said calculation means further being programmed to perform an approximate measurement and a precise measurement and to combine the approximate measurement and the precise measurement to obtain the final angular position, when said marking disk performs a movement smaller than a half-period of the marking during the acquisition of an image by the image sensor.

2. Device according to claim 1, **characterized in that** the calculation means are further programmed only to perform an approximate measurement when said marking disk performs a movement greater than a half-period of the marking during the acquisition of an image by the image sensor.

3. Device according to one of claims 1 and 2, **characterized in that** the calculation means are programmed so as to perform said approximate measurement according to a phase calculation in quadrature

$$\left\{\begin{array}{l} S = \sum_{i=0}^{mG-1} I(i) \cdot \sin\left(\frac{i \cdot 360}{G}\right) \\ C = \sum_{i=0}^{mG-1} I(i) \cdot \cos\left(\frac{i \cdot 360}{G}\right) \\ \hat{\alpha} = \mathrm{atan2}(S,C)/m \end{array}\right.$$

where m is the number of series of identification references, I is the image of the marking, and G is the distance separating two series of references.

4. Device according to one of claims 1 to 3, **characterized in that** said references of the marking disk are arranged in a plurality of series, said series being uniformly distributed angularly according to a second period different from the first and are separated by a sector without references.

5. Device according to claim 4, **characterized in that** said marking comprises series of references positioned along first and second radii, and the image sensor includes two concentric photodiode rings respectively arranged across from the series of references positioned along the first and second radii.

6. Device according to claim 4, **characterized in that** said marking comprises series of references positioned along a single first radius and a reference element, and **in that** the image sensor includes a single ring of photodiodes arranged across from said series of references.

7. Device according to claim 6, **characterized in that** said series are identical and **in that** said reference element is a reference marking added along a second radius different from the first, and **in that** the image sensor comprises z photodiodes regularly distributed along a ring situated across from the reference marking, the reference marking being in the form of an arc of circle, whereof the central angle is comprised between ]360/z and 720/z[, the number z being greater than or equal to the number of said series.

8. Device according to claim 6, **characterized in that** the reference element is a differentiation of one of the series of references by adding or removing one of the references, the angular distribution of said series resulting in the phase shift of 180° of the differentiated series.

9. Device according to claim 8, **characterized in that** the amplitude of the references at the ends of a series of references is gradually reduced.

10. Device according to one of the preceding claims, **characterized in that** the references are marks colored so as to have a contrast that is detectable by the image sensor.

11. Device according to one of claims 1 to 10, **characterized in that** the references are holes.

12. Device according to one of the preceding claims, wherein the ring(s) of photodiodes are arranged on an electronic circuit, **characterized in that** the circuit includes electronic components mounted inside the smallest of the rings, said components being connected with the outside of the ring by a shielded connection.

13. Method for measuring the angular position of a rotor provided with a marking disk mounted concentrically on the rotor, said marking disk being provided with a marking forming identification references, regularly spaced apart from each other according to a first period defining an angle $\alpha_{period}$ separating the centers of two consecutive references, said references being positioned concentrically to the disk, to form at least one series of references comprising a reference element, **characterized in that** the method consists, when said marking disk performs a movement smaller than a half-period of the marking during the acquisition of an image by the image sensor, of performing an approximate measurement considering the series of the marking as a characteristic element of the position of the disk and combining that approximate measurement with a precise measurement of the position considering the frequency of the references as a characteristic element, said precise measurement being obtained by a phase calculation in quadrature, according to

$$
\begin{cases}
S = \displaystyle\sum_{i=0}^{pD-1} I(i) \cdot \sin\left(\frac{i \cdot 360}{D}\right) \\
C = \displaystyle\sum_{i=0}^{pD-1} I(i) \cdot \cos\left(\frac{i \cdot 360}{D}\right) \\
\alpha_p = \mathrm{atan2}(S,C)/p
\end{cases}
$$

where p is the number of identification periods given by $360/\alpha_{period}$, I is the image of the marking, and D is the distance in pixels between the centers of two identification references of a same series.

14. Method according to claim 13, **characterized in that** it further consists, when said marking disk performs a movement larger than a half-period of the marking during the acquisition of an image by the image sensor, of only performing an approximate measurement considering the position of the series of references as a characteristic element of the position of the disk.

## Fig. 1 (Prior Art)

## Fig. 2 (Prior Art)

**Fig. 3**

Fig. 4a

Fig. 4b

**Fig. 5**

**Fig. 6**

**Fig. 7**

**Fig. 8**

Fig. 9

**Fig. 10**

Fig. 11

**Fig. 12**

**Fig. 13**

Fig. 14

**Fig. 15**

color A

color B

**Fig. 16**

**EP 2 430 403 B1**

## RÉFÉRENCES CITÉES DANS LA DESCRIPTION

### Documents brevets cités dans la description

- EP 1890113 A